# EUROPEAN PATENT SPECIFICATION

(11) **EP 3 090 889 B1**
(45) Date of publication and mention of the grant of the patent: **30.10.2019**
(21) Application number: 14871292.0
(22) Date of filing: 14.11.2014
(51) Int. Cl.: B60G 7/00, B21J 5/00, B21K 1/26, C22F 1/04, C22C 21/02, C22C 21/06, C22F 1/00

(54) **AUTOMOTIVE UNDERBODY PART AND METHOD FOR MANUFACTURING SAME**
AUTOMOBILBODENTEIL UND VERFAHREN ZUR HERSTELLUNG DAVON
PARTIE DE BAS DE CAISSE D'AUTOMOBILE ET PROCÉDÉ DE FABRICATION DE CELLE-CI

(30) Priority: 16.12.2013 JP 2013259461
(43) Date of publication of application: 09.11.2016
(73) Proprietor: Nippon Light Metal Company, Ltd., Tokyo 140-8628 (JP)
(72) Inventor: SHIRAI, Kota, Shizuoka-shi Shizuoka 421-3203 (JP); IJIRI, Tetsuya, Shizuoka-shi Shizuoka 421-3203 (JP); OKADA, Hiroshi, Shizuoka-shi Shizuoka 421-3203 (JP); SUMI, Shinichiro, Shizuoka-shi Shizuoka 421-3203 (JP); WAKAI, Koichi, Shizuoka-shi Shizuoka 421-3203 (JP); MORIYAMA, Yoshihiko, Shizuoka-shi Shizuoka 421-3203 (JP)
(74) Representative: Mewburn Ellis LLP
(86) International application number: PCT/JP2014/005728
(87) International publication number: WO 2015/092969

(56) References cited:
- EP-A1- 1 716 265
- JP-A- 2003 001 357
- JP-A- 2008 075 169
- JP-A- 2009 172 657
- JP-A- 2010 163 635
- JP-A- 2010 215 974
- JP-B2- 4 224 676

## Description

### Technical Field

The present invention relates to an aluminum-alloy automotive underbody suspension part having high strength and a manufacturing method thereof, and more specifically, it relates to an aluminum-alloy automotive underbody part having sufficient strength even as a forged part made of an aluminum-alloy casting material and an effective manufacturing method thereof.

### Background Technology

In a field of transportation machines, such as vehicles, demands on emission control and carbon dioxide emission control have been increased. With response to these demands, improvement of fuel economy due to weight saving of a vehicle body has attracted attention, and an application of aluminum-series materials, instead of conventional ferrous metals, is actively considered.

As aluminum materials for transportation machines, if only corrosion resistance is demanded, 1,000-series and 3,000-series aluminum alloys are in heavy usage, but if corrosion resistance, high strength and high toughness are demanded, 6,000-series aluminum alloys that excel in the balance of these characteristics and where productivity is also high or the like are applied in many cases.

However, a thermal treatment, such as a solution treatment, becomes essential after processing in age-hardening aluminum alloys, such as 2,000-series, 6,000-series or 7,000-series, and grain coarsening caused by the thermal treatment occurs. In particular, in recent years, parts becoming very thin or the like is adversely influenced, and with forging materials from extruded materials, a tendency to coarsen crystal grains becomes remarkable in processes from solution treatment to ageing treatment or the like. When extruded materials are used as materials, although a texture of extruded materials themselves is preferable to enhance the strength, these are under conditions where re-crystallization and grain growth easily occur due to the introduction of strain, and it is extremely difficult to suppress reduction of strength of the parts in the process, such as from the solution treatment to the ageing treatment.

In the meantime, the applicant has manufactured aluminum-alloy vehicle parts where the strength is secured within a scope so as not cause re-crystallization and grain growth, by forging round bar casting materials or shape casting materials having a sliced cross-section shape, which is closely related to product projection geometry of forged final products. For example, in Patent Literature 1 (Patent No. 4224676), a method for forging an aluminum alloy where an aluminum alloy is cast by direct chillcasting; sliced materials where cast rods have been cut in a direction that is nearly perpendicular to a casting progress direction is used as a material;
on the occasion of manufacturing a product having greater warp than average film thickness of the product by forging, the cross-sectional shape on a cross section that is nearly perpendicular to the casting progress direction of the cast rods is designed to be closely related to a shape where the final product is projected toward the forging press actuation direction at the time of forging; in the first step of forging, the product is forged in a direction of action of the forging press, which is nearly parallel to a direction of a warp that is formed after forging, and which is also a direction that becomes nearly perpendicular to the sliced surface direction at the end of the material; and a warp deformation, which is equivalent to 30 % or greater of the warp in the final product, is provided to only the material center portion without adding any warp deformation at the side end of the material, is proposed.

In the method for forging an aluminum alloy disclosed in Patent Literature 1, on the occasion of forging a product having a thinner part than the material thickness, any forging defects can be avoided by adjusting a screw-down distance in the first step of forging, and it can contribute to yield improvement and reliability improvement of the product.

### PRIOR ART LITERATURE

### Patent Literature

Patent Literature 1: Patent No. 4224676

### SUMMARY OF THE INVENTION

### Problem to be Solved by the Invention

However, the demand for weight saving of vehicle bodys is further increased in recent years, and while further thinner, high-strength aluminum forged parts are demanded, sufficient strength of parts has not been obtained in the method for forging an aluminum alloy in Patent Literature 1 above. The European patent application EP 2 003 219 A2 discloses a forged automotive underbody part such as a suspension part having enhanced strength, toughness and corrosion resistance.

In light of the problems in the prior art, the objective of the present invention is to provide an aluminum-alloy automotive underbody suspension part having sufficient strength even as a forged part from aluminum-alloy casting materials, and an effective manufacturing method thereof.

### Means for Solving the Problem

The present inventors, in order to accomplish the objective above, discovered that it would be extremely effective to apply plastic deformation to any regions of an aluminum-alloy billet as a previous process of forging, and to control its crystal orientation at sections requiring proof stress and tensile strength in a product, as a result of keen study about the aluminum-alloy automotive underbody part having high strength and a manufacturing method thereof, and they accomplished the present invention.

According to a first aspect, there is provided an automotive underbody suspension part according to claim 1.

Herein, the Schmidt factor is a coefficient between macroscopic normal stress and decomposition shear stress relative to a metal material, and with single-crystal metal, plastic deformation shall be started with smaller external force as the Schmidt factor of a crystal becomes greater. When a cross-sectional area of a sample is *A* and a magnitude of tensile force is *F*, the tensile stress: *σ* = *F*/*A.* Further, if an angle between a direction of tensile force and a slide surface normal line *n* is *θ* and an angle between a tensile direction and a slide direction *d* is *ϕ*, since component force to a slide direction of the tensile force is *Fcosϕ* and an area of the slide surface: *As* = *A*/*cosθ,* decomposition shear stress *τ* to this slide system of external force: *τ* = *Fcosϕ*/*As* = *(F*/*A)* · *cosθcosϕ* = *σcosθcosϕ.* Here, *cosθcosϕ* is a Schmidt factor.

For metal of a face-centered cubic lattice, such as aluminum, twelve slide systems act in general. When crystal orientation and a stress direction are determined, individual slide systems have a unique Schmidt factor, respectively, and it can be stated that the greater the Schmidt factor of the slide system becomes, the smaller the stress required for activity becomes and the more easily the system acts. The Schmidt factor in any crystal indicates a Schmidt factor that is the greatest among the twelve slide systems, and that is in the slide system (primary slide system) that the most easily acts.

In the Sachs theory assuming that the stress to be applied to each crystal is equal to macroscopic stress, strain to be introduced varies per crystal grain, and the slide system to act is one of the principal slide systems; proof stress is *σ₀* + *τ_{CRSS}* · *m.* Here, *σ₀* represents proof stress where an effect of grain size has been added to strength that is unique to an aluminum alloy, *τ_{CRSS}* represents critical decomposition shear stress, and *m* represents an inverse number of the Schmidt factor (*m* value).

In other words, a member with a great inverse number (*m* value) of the Schmidt factor indicates high strength in a direction where the inverse number (*m* value) of the Schmidt factor was measured. As described above, the automotive underbody part of the present invention is characterized such that an average of the inverse numbers (*m* value) of the Schmidt factors calculated from the crystal orientation is 2.3 or greater in the load stress direction at a site of occurrence of the maximum stress when the external force is applied, and the strength in the load stress direction at the site of occurrence of the maximum stress has been effectively improved.

Furthermore, the Schmidt factor becomes a maximum value at 0.5 when an angle between the direction of the tensile force and the slide surface is 45 °, and it becomes a minimum value at 0 when the direction of tensile force and the slide surface are perpendicular or in parallel.

In the automotive underbody suspension part of the present invention, the forged part is made of heat-treatable Al-Mg-Si series aluminum alloy.

Further, the present invention also provides a method for manufacturing an automotive underbody suspension part, characterized by including:
a first step to cast an aluminum alloy;
a second step to apply plastic deformation to the aluminum alloy billet obtained in the first step, and to control its crystal orientation; and
a third step to forge the crystal orientation-controlled aluminum alloy obtained in the second step, and to obtain a forged part where an average of inverse numbers of the Schmidt factors at the site of occurrence of stress is 2.3 or greater.

The number of times to conduct the second step and the third step is not necessarily once, and the second step and the third step can be conducted a plurality of times, respectively.

In the method for manufacturing an automotive underbody suspension part relating to the present invention, it is preferable to have a step to conduct the second step and the third step nearly at the same time. The manufacturing process for the automotive underbody part can be simplified by conducting the control of crystal orientation in the second step and the forming process in the third step nearly at the same time.

In the method for manufacturing an automotive underbody suspension part relating to the present invention, it is preferable that the second step is a step to plastically deform an end of the aluminum alloy billet so as to expend it in nearly one direction (a load stress direction at the site of occurrence of maximum stress in the case of applying the external force).

Further, in the method for manufacturing an automotive suspension part relative to the present invention, it is preferable to use direct chillcasting for the casting in the first step, to cut cast rods that have been cast by the direct chillcasting in a direction that is nearly perpendicular to the casting progress direction, to design a cross-sectional shape of a sliced material that is obtained by the cutting above so as to be closely related to the shape that projects the forged part in the forging press actuation direction upon forging; and to make the sliced material as the aluminum alloy billet.

Further, in the method for manufacturing an automotive underbody suspension part relating to the present invention, it is preferable to further include a fourth step to apply a solution treatment and an ageing treatment to the forged part obtained in the third step.

### Effect of the Invention

According to the present invention, as the forged part from aluminum alloy casting materials, an aluminum-alloy automotive underbody suspension part having sufficient strength and its effective manufacturing method can be provided.

### BRIEF DESCRIPTION OF DRAWINGS

Fig. 1 is a schematic perspective view showing one example of an automotive underbody part relating to an embodiment of the present invention.
Fig. 2 is a schematic view showing one example under a loaded condition at the time of using the automotive underbody part relating to the embodiment of the present invention.
Fig. 3 is an operation flow chart of the method for manufacturing an automotive underbody part relating to the present invention.
Fig. 4 is a schematic perspective view showing one example of a continuous cast rod and a sliced material where the continuous cast rod has been sliced, which are used in the method for manufacturing an automotive underbody part relating to the present invention.
Fig. 5 shows appearance pictures of the sliced material that is used in the method for manufacturing an automotive underbody part relating to the present invention.

### MODE FOR CARRYING OUT THE INVENTION

Hereafter, typical embodiments about the automotive suspension part and its manufacturing method relating to the present invention will be explained in detail with reference to drawings, but the present invention shall not be limited to only these. Furthermore, in the explanation below, the same or equivalent parts/portions shall be marked with the same symbols, and redundant explanations may be omitted. Further, since the drawings are for explaining the present invention on a conceptual basis, dimensions of each of presented constituent elements and their ratios may be different from actual ones.

### 1. Automotive underbody part

Alluminum-alloying of automotive parts from a viewpoint of weight saving of vehicles has been variously examined, and alluminum-alloy hot-die forged parts have been used, for example, even in upper arms, lower arms, transverse links, which are suspension parts for vehicles, and the like, as well. In these parts, because their shapes of these parts have become complicated due to integration of parts for the purpose of expansion of dimensions of vehicle interior, improvement of traveling performance and cost reduction in recent years, stress tends to be concentrated at a certain site. As other vehicle parts, for example, knuckles, trailing arms and the like can be exemplified.

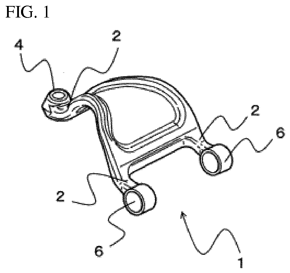

Fig. 1 is a schematic perspective view showing one example of an automotive underbody part relating to the present invention. An automotive underbody part 1 is a forged suspension part, and is greatly warped and has a three-dimensionally complicated shape. The automotive underbody part 1 is made of an aluminum alloy and is made of heat-treatable aluminum alloy. The heat-treatable aluminum alloy is an aluminum alloy for obtaining predetermined strength by a and is a heat treatable 6XXX series (Al-Mg-Si series) alloy.

Although the heat-treatable aluminum alloy can be used for the vehicle body 1, it is preferable to use an expanded material from a viewpoint to guarantee strength and reliability of the automotive underbody part 1, and it is more preferable to use 6,000-series alloy.

The automotive underbody part 1 has a site of occurrence of maximum stress where the maximum stress is generated during a use in arm sections 2, and it is necessary for the site of occurrence of maximum stress to have sufficient strength in the line with a mode of use. Here, the site of occurrence of maximum stress is designed such that an average of the inverse numbers of the Schmidt factors to be calculated from crystal orientation is 2.3 or greater, in the load stress direction if external force is applied.

The automotive underbody part 1 consists of nearly triangular whole shape generally as in Fig. 1, and has a ball joint mounting part 4 and bushing bosses 6 connected with the arm sections 2 at each apex portion of the triangle. It is common that the arm sections 2 have a rib extending in the longitudinal direction of the arm section 2 around each periphery in its width direction (both side end portions) and has a web extending in the longitudinal direction of the arm section 2 in the center in its width direction, respectively. When the automotive underbody part 1 is used, a bushing is pressed into the bushing bosses 6, respectively, and a ball joint is assembled to the ball joint mounting part 4.

Regarding the entire structure and the shape of the automotive underbody part 1 as a premise, in the ordinal automotive underbody part 1, a particular site where the maximum stress is generated during a use (the maximum stress is loaded) will be at the side of the ball joint mounting part 4 of the arm sections 2. Further, even though some differences are created due to conditions or the like for structure design of the automotive underbody part 1, the load stress direction to the arm section 2 becomes a nearly longitudinal direction of the arm section 2.

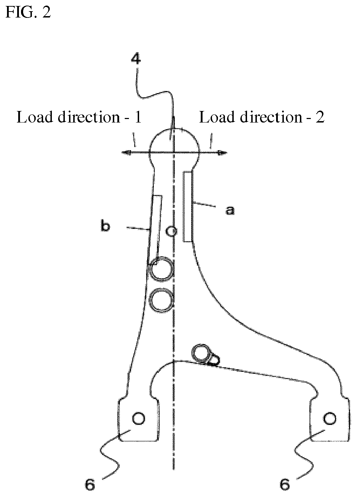

Fig. 2 shows a schematic view showing one example of the load condition at the time of using the automotive underbody part 1. When a load is applied to the ball joint mounting part 4 in a load direction -1 and a load direction -2 while the bushing is secured, the site of occurrence of the maximum stress of the automotive underbody part 1 will be regions *a* and *b.*

Here, if/when the strength of the arm sections 2 at the site of occurrence of maximum stress is insufficient, it becomes difficult to reduce weight while the overall strength of the automotive underbody part 1 is maintained at high. In the meantime, in the automotive underbody part 1 of the present invention, an average of the inverse numbers of the Schmidt factors calculated from the crystal orientation is 2.3 or greater in the load stress direction (nearly longitudinal direction of the arm section 2) if external force is applied, and the strength is improved due to optimization of texture.

Although it is widely known that strength varies according to the texture, the texture is selectively optimized relative to the site of occurrence of maximum stress. As a result, the strength against the stress direction can be enhanced.

Hereafter, in the load stress direction (in the nearly longitudinal direction of the arm section 2) if external force is applied, a method for obtaining an inverse number (m value) of the Schmidt factor from the crystal orientation is explained.

At first, the texture of a tensile test piece at a sampling position at the site of occurrence of maximum stress is measured by a backscattered electron diffraction measuring device attached to a scanning electron microscope (SEM-EBSD). Specifically, a test specimen is sampled so as to allow its observation surface to be perpendicular to the stress direction, and after mechanical polishing and buffing are performed on the observation surface, the processed layer is removed by electrolytic polishing. Orientation information is acquired by SEM-EBSD measurement of the observation surface.

An inverse number (m value) of the Schmidt factor is acquired from the obtained orientation information using EBSD analysis software, and as the analysis software, for example, "OIM Analysis" manufactured by TSL, Inc should be used. Specifically, the acting slide system is assumed as {111} <110>, and the Schmidt factors at points of measurement in the measured view (approximately 100,000 points) are calculated under a condition to provide tensile deformation in the direction perpendicular to the observation surface. An inverse number (m value) of the Schmidt factors in the measured view can be calculated by calculating inverse numbers of the calculated Schmidt factors and assessing an average of all points of measurement.

### 2. Method for manufacturing automotive underbody part

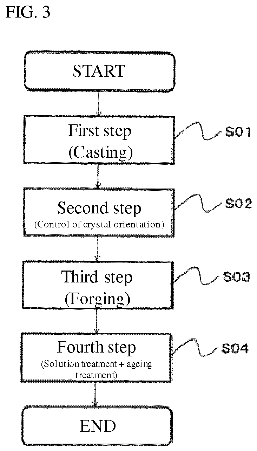

The method for manufacturing an automotive underbody part relating to the present invention provides an effective method for manufacturing an automotive underbody part relating to the present invention. Fig. 3 is an operation flow chart of the method for manufacturing an automotive underbody part relating to the present invention. The method for manufacturing an automotive underbody part relating to the present invention includes: a first step (S01) to cast an alluminum alloy; a second step (S02) to apply plastic deformation to the aluminum alloy billet obtained in the first step (S01), and to control its crystal orientation; and a third step (S03) to forge the crystal orientation-controlled aluminum alloy obtained in the second step (S02). Further, it is preferable to further include a fourth step (S04) to apply a solution treatment to the forged part obtained in the third step (S03). Furthermore, the second step (S02) and the third step (S03) can be integrally implemented as one step.

### (1) Casting of aluminum alloy (first step)

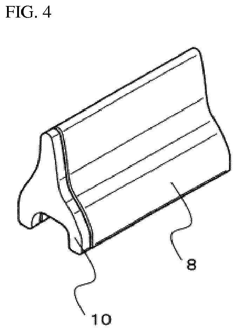

It is preferable to use direct chillcasting for the first step (S01) to cast an aluminum alloy. Fig. 4 shows a schematic perspective view showing one example of a continuous cast rod and a sliced material sliced from that continuous cast rod. In the first step (S01), a continuous cast rod 8 having a sliced cross-sectional shape that is closely related to product projection geometry of a final forged product is manufactured. Furthermore, as described above, it is preferable to use a heat-treatable aluminum alloy for the aluminum alloy, and it is more preferable to use 6,000-series aluminum alloy.

As cross-sectional shape of the continuous cast rod 8, it is also possible to adopt a larger shape than the projection geometry of the final product, but if the cross-sectional shape of the sliced material 10 to be a material on the occasion of forging is larger than the projection geometry of the final product, it is necessary to reduce the cut thickness on the occasion of slicing the continuous cast rod 8 for the purpose of improving the yield. However, if the thickness is too thin, since so-called underfill where a thick portion of the product happens to be chipped, easily occurs, the thickness of the sliced material 10 cannot be extremely thin. In other words, as the lower limit of the thickness of the sliced material 10, the thickness that does not cause the underfill in the thickest portion of the final product will be a criterion.

Furthermore, for forging to shape into the product shape, it is common to forge a material to almost the product shape with coarse forging, and to arrange the shape with finishing forge thereafter.

### (2) Crystal orientation control by plastic deformation (second step)

In the second step (S02) to apply the plastic deformation to the aluminum alloy billet obtained in the first step (S01) and to control the crystal orientation of the aluminum alloy billet, it is preferable that this is a step to apply the plastic deformation so as to extend an end portion of the sliced material 10 obtained by cutting the continuous cast rod 8 to nearly in one direction (a load stress direction of the maximum stress occurrence site if external force is applied).

The region where the end part of the sliced material 10 is extended is equivalent to a region to be the arm section 2 of the automotive underbody part 1 at last, respectively. In the region, the lightweight and highly-strong automotive underbody part 1 can be obtained by forging (forming a metal flow in a specific direction) so as average out at 2.3 or greater of inverse numbers (m value) of the Schmidt factors calculated from the crystal orientation in the load stress direction (nearly longitudinal direction of the arm section 2) if external force is applied. Furthermore, it is preferable that the direction of the extension is a nearly longitudinal direction of the arm part 2.

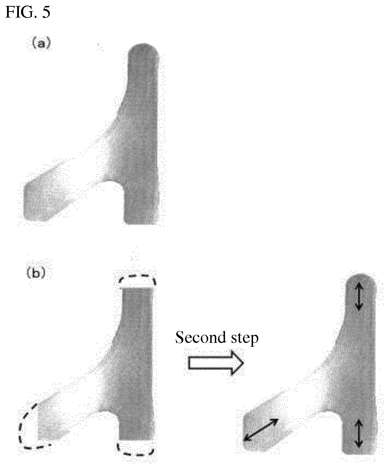

Although the sliced material 10 having the shape above is usable in the second step (S02), since the end part of the sliced material 10 is extended due to forging, it is preferable to use a sliced material where its end portion is designed to be shorter in advance. Fig. 5 shows appearance pictures of (a) a sliced material not considering the extension of the end part due to forging, and (b) a sliced material considering the extension of the end part due to forging. In (b), because the end part extends in the arrow direction in the second step (S02), the sliced material with appropriate shape and size can be obtained.

A reduction of the forging in the second step (S02) is 10 % to 70 %, and is more preferably 30 % to 50 %. This is because it causes strength decrease if the reduction is too great, and the average of the inverse numbers (*m* value) of the Schmidt factors cannot be 2.3 or greater if it is too small.

Furthermore, the number of times to conduct the second step (S02) is not necesarily once, but this can be conducted a plurality of times.

### (3) Forging (third step)

The third step is a step to forge the crystal orientation-controlled aluminum alloy obtained in the second step (S02) to be made a final shape of the automotive underbody part 1. Furthermore, the forging method is not particularly limited, and conventionally-known various forging methods are usable within a scope not impairing the effect of the present invention.

Furthermore, the number of times to conduct the third step (S03) is not necessarily once, but this can be conducted a plurality of times.

### (4) Solution treatment and ageing treatment (fourth step)

If a heat-treatable aluminum alloy is used as the aluminum alloy, it is preferable to apply a solution treatment and an ageing treatment to the forged part having the final shape by forging in the third step (S03). The strength of the entire forged part can be improved by applying the appropriate ageing treatment after the solution treatment.

Conditions for the solution treatment and the ageing treatment are not particularly limited, and conventionally-known various solution treatments and ageing treatments can be used within a scope not impairing the effect of the present invention. Furthermore, since these optimal conditions rely upon a type of the aluminum alloy and the shape and size of the forged part, it is preferable to conduct metallographic observation and mechanical characteristic evaluation and to appropriately select preferable conditions.

Thus, the typical embodiments of the present invention were explained, but the present invention is not limited to only these, and it is possible to variously change designs, and those design changes shall all be included in the technical scope of the present invention.

### EXAMPLE

### <<Example>>

A heat-treatable aluminum alloy having the composition shown in Table 1 was semi-continuously cast to a shape shown in Fig. 3. After the obtained billet was homogeneous-treated, [the treated billet] was cut to have 30 mm of thickness (first step), respectively.

After the second step to apply the plastic deformation to the obtained aluminum billet and to control its crystal orientation, hot forging (third step) [coarse forging --> finishing forging] was conducted and the forged product with the shape show in Fig. 1 was obtained. The hot forging was used for the plastic deformation in the second step, and conditions for the hot forging were 500 °C of material temperature and 40 % of reduction. Furthermore, T6 thermal refining was applied to the obtained forged product (fourth step).

Test pieces were sampled from the sites of occurrence of maximum stress (*a* and *b* shown in Fig. 2) of the obtained forged product, and inverse numbers (m value) of the Schmidt factors were calculated using the SEM-EBSD method above. Furthermore, the measurement was conducted using a complex system with a scanning electron microscope (SEM) manufactured by JEOL, Ltd. and a backscattered electron diffraction (EBSD) measuring apparatus manufactured by TSL. The measurement conditions are 800 µm × 800 µm of field area, and 3 µm of distance between measurement points of crystal orientation (step size). After the measurement, crystal orientation analysis was implemented using OIM System manufactured by TSL. Obtained inverse numbers of Schmidt factors (*m* value) are shown in Table 2.

Further, a tensile test was conducted with the test pieces acquired from the sites of occurrence of maximum stress (*a* and *b* shown in Fig. 2) of the forged product, and 0.2 % proof stress, tensile strength and stretch were measured. For tensile test prices, #14 A test pieces described in JISZ2241 were used. For a tension rate, in conformity to JISZ2241, 2 mm/min was set for up to 0.2 % proof stress, and 5 mm/min was set for 0.2 % proof stress and thereafter. Furthermore, the number N of tests was three, and its average value was calculated. Obtained values are shown in Table 2, respectively.

### <<Comparative example>>

Forged products were obtained as similar to the examples, except for not conducting the second step to control the crystal orientation of the aluminum alloy billet. Further, the *m* values, 0.2 % proof stress, tensile strength and stretch were measured as similar to Examples. Obtained values are shown in Table 2, respectively.

**[Table 1]**

| Si | Fe | Cu | Ti | Mn | Mg | Cr |
|---|---|---|---|---|---|---|
| 1.05 | 0.19 | 0.42 | 0.02 | 0.37 | 0.85 | 0.27 |
| (mess%) | | | | | | |

**[Table 2]**

| | Second step (Control of crystal orientation) | Thermal refining | Sampling position of test pieces | Sachs *m* value | 0.2% proof stress | Tensile strength (MPa) | Stretch (%) |
|---|---|---|---|---|---|---|---|
| Example | Conducted | T6 | a | 2.37 | 417 | 4.35 | 10.3 |
| | | T6 | b | 2.43 | 416 | 4.38 | 13.9 |
| Comparative Example | Not conducted | T6 | a | 2.29 | 401 | 4.30 | 12.7 |
| | | T6 | b | 2.28 | 397 | 4.24 | 12.1 |

In the forged products of the example, the inverse numbers (*m* value) of the Schmidt factors are 2.3 or greater with all the test pieces, but the inverse numbers (*m* value) of the Schmidt factors are less than 2.3 with all test pieces of the forged products in the comparative example. In response to this, it can be confirmed that 0.2 % proof stress of the forged products in the example is clearly improved compared to that of the forged products in the comparative example.

### Description of Symbols

- 1: automotive underbody part,
- 2: arm section,
- 4: ball joint mounting part,
- 6: bushing boss,
- 8: continuous cast rod,
- 10: sliced material

## Claims

1. An automotive underbody suspension part that is a forged part made of a heat-treatable Al-Mg-Si-series alloy, wherein
the part has an arm section, and an average value of inverse Schmid factor calculated from the Al-Mg-Si-series alloy crystal orientation in the longitudinal direction at the arm section, is 2.3 or greater.

2. A method for manufacturing an automotive underbody suspension part having an arm section, comprising:
casting a heat-treatable Al-Mg-Si-series aluminum alloy billet;
performing a preliminary forging operation to apply plastic deformation to the aluminum alloy billet to control its crystal orientation such that an average value of inverse Schmid factor calculated from the aluminium-alloy crystal orientation in the longitudinal direction at the arm section, is 2.3 or greater; and
forging the crystal orientation-controlled aluminum alloy billet to obtain the part in which the average value of inverse Schmid factor is 2.3 or greater in the longitudinal direction of the arm section;
wherein
the preliminary forging operation produces a direction of extension in the longitudinal direction of the arm section and a forging reduction of from 10% to 70%.

3. The method for manufacturing an automotive underbody suspension part according to claim 2, wherein
the plastic deformation is applied to an end part of the aluminum alloy billet so as to extend the billet in the longitudinal direction of the arm section.

4. The method for manufacturing an automotive underbody suspension part according to claim 2 or claim 3, wherein
the casting operation is performed by direct chillcasting an aluminium alloy, and then cutting a slice of the cast rod perpendicular to the casting progress direction to provide the aluminum alloy billet for the application of the plastic deformation;
the shape of the slice approximating the shape of the part obtained by the forging operation when projected in a forging press operation direction of the forging operation.

5. The method for manufacturing an automotive underbody suspension part according to any of claims 2 to 4, further comprising:
applying a solution treatment and an ageing treatment to the forged part.

## Patentansprüche

1. Automobilboden-Aufhängeteil, der ein geschmiedeter Teil aus einer wärmebehandelbaren Legierung der Al-Mg-Si-Reihe ist, wobei
der Teil einen Armabschnitt aufweist und ein Mittelwert des inversen Schmid-Faktors, der aus der Kristallorientierung der Legierung der Al-Mg-Si-Reihe in Längsrichtung am Armabschnitt berechnet wird, 2,3 oder mehr beträgt.

2. Verfahren zur Herstellung eines Automobilboden-Aufhängeteiles mit einem Armabschnitt, das Folgendes umfasst:
Gießen eines wärmebehandelbaren Aluminiumlegierung-Halbzeugs der Al-Mg-Si-Reihe;
Durchführen eines vorläufigen Schmiedevorgangs, um eine plastische Verformung auf das Aluminiumlegierung-Halbzeug aufzubringen, um dessen Kristallorientierung so zu steuern, dass ein Mittelwert des inversen Schmid-Faktors, der aus der Kristallorientierung der Aluminiumlegierung in Längsrichtung am Armabschnitt berechnet wird, 2,3 oder mehr beträgt; und
Schmieden des Kristallorientierung-kontrollierten Aluminiumlegierung-Halbzeugs, um jenen Teil zu erhalten, bei dem der Mittelwert des inversen Schmid-Faktors in Längsrichtung des Armabschnitts 2,3 oder mehr beträgt;
wobei
der vorläufige Schmiedevorgang eine Verlängerungsrichtung in der Längsrichtung des Armabschnitts sowie eine Schmiedeverringerung um 10 % bis 70 % erzeugt.

3. Verfahren zur Herstellung eines Automobilboden-Aufhängeteiles nach Anspruch 2, wobei
die plastische Verformung auf einen Endabschnitt des Aluminiumlegierung-Halbzeugs aufgebracht wird, um das Halbzeug in Längsrichtung des Armabschnitts zu verlängern.

4. Verfahren zur Herstellung eines Automobilboden-Aufhängeteiles nach Anspruch 2 oder Anspruch 3, wobei
der Gussvorgang durch den Strangguss einer Aluminiumlegierung und dann das Schneiden einer Scheibe der gegossenen Stange normal auf die Gussprozessrichtung durchgeführt wird, um das Aluminiumlegierung-Halbzeug zum Aufbringen der plastischen Verformung bereitzustellen;
die Form der Scheibe der Form jenes Teils, der durch den Schmiedevorgang erhalten wurde, bei Projektion in eine Schmiedepressvorgangsrichtung des Schmiedevorgangs ähnlich ist.

5. Verfahren zur Herstellung eines Automobilboden-Aufhängeteils nach einem der Ansprüche 2 bis 4, das weiters Folgendes umfasst:
Anwenden einer Lösungsbehandlung und einer Alterungsbehandlung auf den geschmiedeten Teil.

## Revendications

1. Pièce de suspension de dessous de caisse automobile qui est une pièce forgée constituée d'un alliage de série Al-Mg-Si pouvant être traité thermiquement, dans laquelle
la pièce a une section de bras, et une valeur moyenne de facteur de Schmid inverse calculée à partir de l'orientation cristalline d'alliage de série Al-Mg-Si dans la direction longitudinale au niveau de la section de bras est égale ou supérieure à 2,3.

2. Procédé de fabrication d'une pièce de suspension de dessous de caisse automobile ayant une section de bras, comprenant :
couler une billette d'alliage d'aluminium de série Al-Mg-Si pouvant être traité thermiquement ;
effectuer une opération de forgeage préliminaire pour appliquer une déformation plastique à la billette d'alliage d'aluminium afin de commander son orientation cristalline de sorte qu'une valeur moyenne de facteur de Schmid inverse calculée à partir de l'orientation cristalline d'alliage d'aluminium dans la direction longitudinale au niveau de la section de bras soit égale ou supérieure à 2,3 ; et
forger la billette d'alliage d'aluminium à orientation cristalline commandée pour obtenir la pièce dans laquelle la valeur moyenne de facteur de Schmid inverse est égale ou supérieure à 2,3 dans la direction longitudinale de la section de bras ;
dans lequel
l'opération de forgeage préliminaire produit une direction d'extension dans la direction longitudinale de la section de bras et une réduction de forgeage de 10 % à 70 %.

3. Procédé de fabrication d'une pièce de suspension de dessous de caisse automobile selon la revendication 2, dans lequel
la déformation plastique est appliquée à une partie d'extrémité de la billette d'alliage d'aluminium de manière à étendre la billette dans la direction longitudinale de la section de bras.

4. Procédé de fabrication d'une pièce de suspension de soubassement de véhicule automobile selon la revendication 2 ou la revendication 3, dans lequel
l'opération de coulée est réalisée en réalisant une coulée à refroidissement direct d'un alliage d'aluminium, puis en découpant une tranche de la tige coulée perpendiculairement à la direction de progression de coulée pour fournir la billette d'alliage d'aluminium pour l'application de la déformation plastique ;
la forme de la tranche se rapprochant de la forme de la pièce obtenue par l'opération de forgeage lorsqu'elle est projetée dans une direction de fonctionnement de presse de forgeage direction de l'opération de forgeage.

5. Procédé de fabrication d'une pièce de suspension de dessous de caisse automobile selon l'une quelconque des revendications 2 à 4, comprenant en outre l'étape consistant à :
appliquer une solution de traitement et un traitement de vieillissement à la pièce forgée.
